# EUROPÄISCHE PATENTANMELDUNG

(11) **EP 3 680 057 A1**
(43) Veröffentlichungstag der Anmeldung: **15.07.2020**
(21) Anmeldenummer: 19151667.3
(22) Anmeldetag: 14.01.2019
(51) Int. Cl.: B23K 26/08, B23K 26/38, B23K 26/144, B23K 26/142, B23K 101/06

(54) **VERFAHREN UND VORRICHTUNG ZUR LASERBEARBEITUNG VON ROHREN**

(71) Anmelder: Müller, Alexander, 5466 Kaiserstuhl (CH); Murga, Anastasiya, 5466 Kaiserstuhl (CH); Müller Senior, Alexander, 84453 Mühldorf am Inn (DE)
(72) Erfinder: Müller, Alexander, 8600 Dübendorf (CH)
(74) Vertreter: Münch, Martin Walter

(57) **Zusammenfassung**

Es ist eine Laserbearbeitungsvorrichtung (1) zur Bearbeitung von Rohren (10) mittels eines Lasers vorgesehen, welche zusätzlich einen Gas- und Partikelstrom aus einer Quelle (18) in das Rohr einkoppeln kann. Dazu ist eine Zuführleitung (21) vorgesehen, welche am Rohr angekoppelt wird und mit diesem bei der translatorischen Bewegung des Rohrs bei dessen Bearbeitung mitbewegt wird. Auf diese Weise ist eine gute Aufnahme des Abbrandes im Rohr möglich und die Partikel können eine Oberflächenbehandlung der Innenseite des Rohrs ausführen. Bevorzugt werden gehärtete Glasstrahlperlen als Partikel verwendet.

## Beschreibung

### Gebiet der Erfindung

Die Erfindung betrifft die Bearbeitung von Rohren mittels Laser. Insbesondere betrifft die Erfindung ein Verfahren zur Laserbearbeitung eines Rohrs gemäss Oberbegriff des Anspruchs 1 und eine Laserbearbeitungsvorrichtung für Rohre gemäss Anspruch 11, mit welcher das Verfahren durchführbar ist.

### Hintergrund

DE 4133350 A1 zeigt ein Verfahren und eine Vorrichtung, bei welchen ein Rohr rotierbar gehalten und mittels eines beweglich angeordneten Lasers bearbeitbar ist. Dabei wird ein flüssiges Kühlmittel durch das Rohr gepumpt, wodurch geschmolzener Stahl und Schlacke in dem Kühlmittel verfestigt und aus dem Rohr ausgeschwemmt werden. Damit soll ein Anhaften von Schlacke an der Innenseite des Rohrs minimiert oder ausgeschlossen werden. JP 200632661 A zeigt ein Verfahren und eine Vorrichtung zur Laserbearbeitung eines Rohrs, wobei das Rohr translatorisch und rotierend bewegt und vom Laser bearbeitet wird. Im Inneren des Rohrs wird eine Düse angeordnet, mittels welcher Trockeneispartikel erzeugt werden, welche in dem Rohr mittels des Gasstrahls aus der Düse gefördert werden. Dies soll einerseits eine Beschädigung der Rohrinnenseite auf der der Eintrittsstelle des Laserstrahls gegenüberliegenden Rohrinnenseite verhindern, indem der Laserstrahl im Rohrinneren an den Trockeneispartikels gestreut wird und Energie durch die Sublimation der Trockeneispartikel zu Kohlendioxid verliert. Anderereseits sollen die Trockeneispartikel Grate an der Eintrittsstelle des Lasers entfernen können. Es wird erwähnt, dass auch keramische Partikel anstelle des Trockeneises verwendet werden können, ohne dies genauer zu erläutern.

### Darstellung der Erfindung

Der Erfindung liegt die Aufgabe zu Grunde eine verbesserte Laserbearbeitung eines Rohrs zu erzielen. Diese Aufgabe wird mit den kennzeichnenden Merkmalen des Anspruchs 1 gelöst.

Gemäss der Erfindung ist eine Quelle für einen Gas- und Partikelstrom vorgesehen und es wird die bewegliche Zuführungsleitung für diesen Gas- und Partikelstrom so an das freie Ende des zu bearbeitenden Rohrs angekoppelt, dass die Zuführungsleitung der von der Laserbearbeitungsvorrichtung bewirkten translatorischen Hin- und Her-Bewegung des Rohrs folgt. Dies ermöglicht es, den Gasstrahl und die von ihm geförderten Partikel möglichst vollständig und trotz der Rohrbewegung gleichmässig in das Rohr einzuführen bzw. dort wirksam werden zu lassen. Dadurch kann das Problem des Abbrandes im Rohrinneren, der durch das Laserschneiden entsteht, besser als nach Stand der Technik gelöst werden und es wird auch möglich, durch die Partikel eine gleichmässige Bearbeitung der Rohrinnenhaut zu erreichen. Durch die gleichzeitig mit dem Laserbearbeitungsvorgang des Rohrs erfolgende Partikeleinleitung wird der vom Laser erzeugte Funkenstrahl im selben Arbeitsprozess aufgefangen. Durch geeignete Wahl der Partikel kann der ganze Funkenstrahl mitgenommen und zusätzlich auch eine gewünschte Oberflächenbehandlung an der Innenseite des Rohrs erfolgen. Die Partikel und der mitgenommene Abbrand können einem Recyclingbehälter zugeführt werden. Es ergibt sich eine effiziente und kostengünstige Bearbeitung des Rohres.

Bevorzugt werden als Partikel Glasstrahlperlen verwendet. Es hat sich gezeigt, dass diese eine gute Wirkung beim Auffangen des Abbrandes aufweisen und zudem eine Oberflächenbehandlung im Rohr ermöglichen. Bevorzugt sind dies gehärtete Glasstrahlperlen, insbesondere mit einer Mohshärte im Bereich von 6 bis 7, welche besonders für die Oberflächenbehandlung der üblicherweise bearbeiteten Metallrohre geeignet sind. Weiter ist es bevorzugt, dass die Korngrösse der Glasstrahlperlen im Bereich von 100µm bis 400µm gewählt wird und insbesondere im Bereich von 150µm bis 250µm. Es hat sich gezeigt, dass damit im Zusammenspiel mit der Laserbearbeitung besonders gute Resultate erzielbar sind. Bevorzugt wird als Gas Luft verwendet, was eine besonders einfache Ausführung des Verfahrens ergibt. Es ist aber auch möglich andere Gase zu verwenden. Ebenso ist es möglich, ein anderes Feinstrahlmittel als Glasstrahlperlen zu verwenden.

Bevorzugt ist es, wenn die die Zuführleitung mit dem Rohr gekoppelt wird, indem sie mechanisch mit dem Rohr verbunden wird, was eine besonders einfache Ausführung des Verfahrens ergibt, da die beweglich angeordnete Zuführleitung passiv den von der Laserbearbeitungsvorrichtung vorgegebenen Translationsbewegung des zu bearbeitenden Rohrs folgen kann. Es ist aber auch möglich, die Zuführleitung so mit dem Rohr zu koppeln, dass sie das Rohr berührend an dieses angelegt und aktiv angetrieben derart verfahren wird, dass sie dieselbe Translationsbewegung wie das Rohr ausführt, so dass sie während der Bearbeitung des Rohrs die am Rohr angelegte Position beibehält. Bevorzugt ist, dass die Zuführleitung mit dem Rohr derart gekoppelt wird, dass sie von der rotierenden Rohrbewegung entkoppelt ist, so dass die Zuführleitung der Translationsbewegung des Rohrs folgt, dessen Rotationsbewegung aber nicht folgt. Dies verhindert die Rotation der Zuführleitung, welche für die Einkopplung des Gas- und Partikelstroms in das Rohr nicht benötigt wird und lediglich den Rohrdrehantrieb der Laserbearbeitungsvorrichtung unnötig belasten würde, wenn dieser auch die Zuführleitung drehend antreiben würde. Bevorzugt ist weiter, dass die Bearbeitung des Rohrs durch den Laserstrahl in einer Bearbeitungskabine stattfindet und die Kopplung der Zuführleitung mit dem Ende des zu bearbeitenden Rohrs innerhalb der Bearbeitungskabine erfolgt. Damit ist sichergestellt, dass die Einkopplung des Gas- und Partikelstroms in das Rohr nahe der Bearbeitungszone durch den Laserstrahl erfolgt, was für die Wirksamkeit der Partikel bei der Aufnahme des Abbrands und bei der Bearbeitung der Rohrinnenseite vorteilhaft ist. Als Zuführleitung kann eine starre Leitung zwischen Gas- und Partikelquelle und dem Ende des Rohrs verwendet werden, welche entsprechend mindestens translatorisch in Rohrlängsrichtung bewegbar in der Vorrichtung angeordnet wird. Dabei wird die Gas- und Partikelquelle bevorzugt mit der starren Zuführleitung mitbewegt. Eine starre Leitung und ggf. die Mitbewegung der Quelle ist vorteilhaft, da sie den Gas- und Partikelstrom von der Quelle zum Rohr geradlinig verlaufend zuführen kann, was für die Wirksamkeit des Gas- und Partikelstroms zur Aufnahme des Abbrands und zur Oberflächenbearbeitung erhöht. Es ist aber auch möglich, einen Teil der Zuführleitung als flexible Leitung auszuführen, insbesondere, wenn die Quelle stationär angeordnet wird. Auch die ganze Ausführung der Zuführleitung als flexible Leitung ist möglich. Weiter ist es bevorzugt, dass der Kopplungsbereich ganz oder teilweise durch eine mechanische Abschirmung umgeben wird, welche aus dem Kopplungsbereich austretende Partikel auffängt. Obwohl durch die erfindungsgemässe Kopplung der Zuführleitung und dem Rohr nur ein sehr geringer Austritt von Partikeln und Abbrand innerhalb der Bearbeitungszone bzw. Bearbeitungskabine erfolgt, ist es vorteilhaft eine mechanische Abschirmung vorzusehen, welche allenfalls aus dem Rohr austretende Partikel auffangen kann.

Der Erfindung liegt weiter die Aufgabe zu Grunde eine verbesserte Laserbearbeitungsvorrichtung zu schaffen. Diese Aufgabe wird mit einer Laserbearbeitungsvorrichtung mit den Merkmalen des Anspruchs 11 gelöst.

Gemäss der Erfindung weist die Laserbearbeitungsvorrichtung eine Quelle für einen Gas- und Partikelstrom auf und die Zuführungsleitung für diesen Gas- und Partikelstrom ist an das freie Ende des Rohrs ankoppelbar, so dass die bewegbare Zuführungsleitung der von der Laserbearbeitungsvorrichtung bewirkten translatorischen Hin- und Her-Bewegung des Rohrs folgt. Dies ermöglicht es, den Gasstrahl und die von ihm geförderten Partikel möglichst vollständig und trotz der Rohrbewegung gleichmässig in das Rohr einzuführen bzw. dort wirksam werden zu lassen. Dadurch kann das Problem des Abbrandes im Rohrinneren, der durch das Laserschneiden entsteht, gelöst werden und es wird auch möglich, durch die Partikel eine Bearbeitung der Rohrinnenhaut zu erreichen. Durch die gleichzeitig mit dem Laserbearbeitungsvorgang des Rohrs erfolgende Partikeleinleitung wird der vom Laser erzeugte Funkenstrahl im selben Arbeitsprozess aufgefangen. Durch geeignete Wahl der Partikel kann der ganze Funkenstrahl mitgenommen und zusätzlich auch eine gewünschte Oberflächenbehandlung an der Innenseite des Rohrs erfolgen. Die Partikel und der mitgenommene Abbrand können einem Recyclingbehälter zugeführt werden. Es ergibt sich mit dieser Laserbearbeitungsvorrichtung eine effiziente und kostengünstige Bearbeitung des Rohres.

Bevorzugt weist die Partikelquelle als Partikel Glasstrahlperlen auf, insbesondere Glasstrahlperlen mit einer Mohshärte im Bereich von 6 bis 7 und insbesondere Glasstrahlperlen mit einer Korngrösse im Bereich von 100µm bis 400µm und insbesondere im Bereich von 150µm bis 250µm. Wird die Partikelquelle mit Glasstrahlperlen als Partikel vorgesehen, so ergibt sich eine gute Wirkung beim Auffangen des Abbrandes und zudem eine Oberflächenbehandlung im Rohr. Bevorzugt sind dies gehärtete Glasstrahlperlen, insbesondere mit einer Mohshärte im Bereich von 6 bis 7, welche besonders für die Oberflächenbehandlung der üblicherweise bearbeiteten Metallrohre geeignet sind. Weiter ist es bevorzugt, dass die Korngrösse der Glasstrahlperlen der Partikelquelle im Bereich von 100µm bis 400µm liegt und insbesondere im Bereich von 150µm bis 250µm. Es hat sich gezeigt, dass damit im Zusammenspiel mit der Laserbearbeitung besonders gute Resultate erzielbar sind. Bevorzugt wird als Gas der Gasquelle Luft vorgesehen, was eine besonders einfache Ausführung der Laserbearbeitungsvorrichtung ergibt. Es ist aber auch möglich andere Gase zu verwenden

Bevorzugt ist es, wenn die die bewegbare Zuführleitung mit dem Rohr gekoppelt ist, indem sie mit einer Kopplungseinrichtung, insbesondere einer Klemmeinrichtung, mechanisch mit dem Rohr verbindbar ist, was eine besonders einfache Ausführung des Verfahrens ergibt, da die Zuführleitung passiv den von der Laserbearbeitungsvorrichtung vorgegebenen Translationsbewegung des zu bearbeitenden Rohrs folgen kann. Es ist aber auch möglich, die Zuführleitung so mit dem Rohr zu koppeln, dass sie das Rohr berührend an dieses anlegbar und aktiv angetrieben derart verfahrbar ist, dass sie dieselbe Translationsbewegung wie das Rohr ausführt, so dass sie während der Bearbeitung des Rohrs die am Rohr angelegte Position beibehält. Bevorzugt ist, dass die Zuführleitung mit dem Rohr derart koppelbar ist, dass sie von der rotierenden Rohrbewegung entkoppelt ist, so dass die Zuführleitung der Translationsbewegung des Rohrs folgt, dessen Rotationsbewegung aber nicht folgt. Dies verhindert die Rotation der Zuführleitung, welche für die Einkopplung des Gas- und Partikelstroms in das Rohr nicht benötigt wird und lediglich den Rohrdrehantrieb der Laserbearbeitungsvorrichtung unnötig belasten würde, wenn dieser auch die Zuführleitung drehend antreiben muss. Bevorzugt ist weiter, dass die Bearbeitung des Rohrs durch den Laserstrahl in einer Bearbeitungskabine erfolgt und die Kopplung der Zuführleitung mit dem Ende des zu bearbeitenden Rohrs innerhalb der Bearbeitungskabine erfolgt. Damit ist sichergestellt, dass die Einkopplung des Gas- und Partikelstroms in das Rohr nahe der Bearbeitungszone durch den Laserstrahl erfolgt, was für die Wirksamkeit der Partikel bei der Aufnahme des Abbrands und bei der Bearbeitung der Rohrinnenseite vorteilhaft ist. Als Zuführleitung kann eine starre Leitung zwischen Gas- und Partikelquelle und dem Ende des Rohrs verwendet werden, welche entsprechend translatorisch bewegbar in der Vorrichtung angeordnet wird. Dabei wird die Gas- und Partikelquelle bevorzugt mit der starren Zuführleitung mitbewegt. Eine starre Leitung und ggf. die Mitbewegung der Quelle ist vorteilhaft, da sie den Gas- und Partikelstrom von der Quelle zum Rohr geradlinig verlaufend zuführen kann. Es ist aber auch möglich, einen Teil der Zuführleitung als flexible Leitung auszuführen, insbesondere, wenn die Quelle stationär angeordnet wird. Auch die ganze Ausführung der Zuführleitung als flexible Leitung ist möglich. Weiter ist es bevorzugt, dass der Kopplungsbereich ganz oder teilweise durch eine mechanische Abschirmung umgeben wird, welche aus dem Kopplungsbereich austretende Partikel auffängt. Obwohl durch die erfindungsgemässe Kopplung der Zuführleitung und dem Rohr nur ein sehr geringer Austritt von Partikeln und Abbrand innerhalb der Bearbeitungszone bzw. Bearbeitungskabine erfolgt, ist es vorteilhaft eine mechanische Abschirmung vorzusehen, welche allenfalls aus dem Rohr austretende Partikel auffangen kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 schematisch ein Ausführungsbeispiel einer Laserbearbeitungsvorrichtung gemäss der Erfindung in Seitenansicht;
Figur 2 eine Detailansicht des Ausführungsbeispiels von Figur 2 mit der Kopplung in der Bearbeitungskabine;
Figur 3 eine weitere Detailansicht der Bearbeitungszone und der Kopplung; und
Figur 4 ebenfalls eine Seitenansicht mit einem Beispiel einer mechanischen Abschirmung zum Auffangen von Partikeln.

### Weg(e) zur Ausführung der Erfindung

Die Figuren zeigen eine Laserbearbeitungsvorrichtung, mittels welcher ein Rohr mit einem Laserstrahl bearbeitbar ist. Es werden dabei auf bekannte Weise Durchbrüche im Rohrmantel mittels des Laserstrahls erzeugt und der bearbeitete Abschnitt des Rohrs wird vom Rest des Rohrs abgetrennt. Die gezeigte Laserbearbeitungsvorrichtung dient als Beispiel zur Erläuterung der Erfindung. Die Begriffe unten und oben und links und rechts werden nachfolgend so verwendet, wie sie den Darstellungen in den Figuren entsprechen.

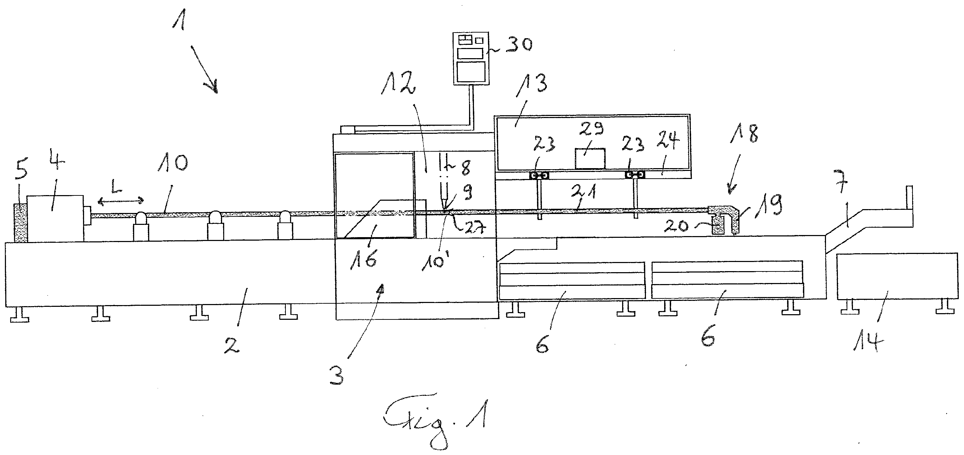

In der Seitenansicht von Figur 1 ist die Laserbearbeitungsvorrichtung mit 1 bezeichnet. Der grundsätzlich bekannte Teil der Vorrichtung, mittels welchem ein Metallrohr durch einen Laserstrahl bearbeitet wird, kann zum Beispiel eine Vorrichtung vom Typ TruLaser Tube 7000 des Herstellers Trumpf sein. Auf einer Maschinenbasis 2, die auf einem nicht dargestellten Boden steht, ist ein Vorschub- und Drehantrieb 4 vorgesehen, mittels welchem ein zu bearbeitendes Rohr 10 in dessen Längsrichtung translatorisch vor- und zurück bewegt bzw. hin- und herbewegt werden kann, wie in Figur 1 mit dem Pfeil L angedeutet. Ferner kann das Rohr 10 um seine Längsachse rotiert werden. Der Antrieb 4 ist zum Beispiel elektromotorisch ausgeführt und wird durch eine mit dem Kasten 30 angedeutete Steuerung der Laserbearbeitungsvorrichtung gesteuert. Das zu bearbeitende Rohr 10, das ein im Querschnitt rundes oder eckiges Rohr sein kann, wird im Antrieb 4 eingespannt wird und bis zu einem Durchschiebefutter 16 geführt, in welchem es ebenfalls translatorisch und rotierbar antreibbar sein kann. Mit seinem vorderen freien Ende 10' kommt das Rohr in die eigentliche Bearbeitungsstation 3 zu liegen, in welcher ein Laserstrahl 9 aus einer nur angedeuteten Laserquelle 8 das Rohr bearbeiten kann. Dies erfolgt in einer während der Bearbeitung teilweise geschlossenen Bearbeitungskabine 12 der Vorrichtung 1. Die Steuerung 30 der Laserbearbeitungsvorrichtung bewegt das Rohr 10 translatorisch und rotatorisch unter dem in der Regel fix positionierten Laserstrahl hindurch, welcher ebenfalls durch die Steuerung betätigt wird. Die translatorische Hin- und Her-Bewegung und die Drehung des Rohrs um seine Längsmittelachse wird von der Steuerung auf Grund zuvor eingegebener Bearbeitungsdaten für das Rohr vorgenommen, um die gewünschte Bearbeitung, insbesondere die gewünschten Durchbrüche im Rohrmantel, zu erzeugen. Ebenfalls kann die Steuerung die Ablängung des Rohrs mit dem Laserstrahl bewirken, so dass ein bearbeiteter Rohrabschnitt vom restlichen Rohrrohling abgeschnitten wird. Über ein Fertigteilförderband 6 und eine Abfallteilbeförderungseinrichtung 7 mit einem Schrottbehälter 14 werden die hergestellten rohrförmigen Teile ausgegeben. Eine Absaugvorrichtung 5 ist bekannterweise vorgesehen, um die bei der Rohrbearbeitung im Rohr befindlichen Abbrandteile abzusaugen. Die geschilderte Rohrbearbeitung ist dem Fachmann bekannt und muss nicht genauer erläutert werden.

Gemäss der Erfindung ist eine Quelle für einen Gas- und Partikelstrom vorgesehen, welche in Figur 1 schematisch dargestellt und mit 18 bezeichnet ist. Sie weist in einer Ausführungsform eine Druckluftquelle 19 auf, die hier schematisch als Druckluftpistole dargestellt ist, und sie weist einen Partikelvorrat 20 auf. Die Quelle 18 ist so ausgeführt, dass die Partikel im Partikelvorrat von der Druckluft gefördert werden, wenn die Quelle 18 aktiviert wird. Dies kann insbesondere so erfolgen, dass die Steuerung 30 der Laserbearbeitungsvorrichtung 1 die Quelle 18 aktiviert, so dass der Druckluftstrom aktiv ist und die Partikel fördert, bzw. die Quelle wieder deaktiviert. Die Quelle kann allerdings auch händisch an der Quelle 18 selber aktiviert und deaktiviert werden, wenn dies gewünscht ist. Der Druckluftstrom mit den Partikeln wird von der Quelle 18 über eine Zuführleitung 21 zum freien Ende 10' des Rohrs 10 gefördert. Dieses befindet sich in Längsrichtung des Rohrs 10 nach bzw. hinter dem Durchschiebefutter 16 und dem Laserstrahl 9. Gemäss der Erfindung wird die translatorisch bewegbare Zuführleitung so an das freie Ende 10' des Rohrs 10 angekoppelt, dass die Zuführleitung der von der Laserbearbeitungsvorrichtung bewirkten translatorischen Hin- und Her-Bewegung des Rohrs 10 folgt. Dies ermöglicht es, den Gasstrahl und die von ihm geförderten Partikel möglichst vollständig in das Rohr 10 einzuführen. In Figur 1 ist die Zuführleitung 21 als starre rohrförmige Leitung dargestellt, welche an einer oberhalb der Zuführleitung 21 angeordneten Halterung 24 mittels entlang dieser verschiebbaren Wagen 23 translatorisch ebenfalls in der Rohrlängsrichtung hin- und her bewegbar ist. Das Rohr 10 und die Zuführleitung werden dabei in der Vorrichtung so angeordnet, dass sie im Wesentlichen koaxial zu liegen kommen. Auch der Bereich mit der Halterung und den Wagen kann durch eine in der Figur 1 in offener Stellung dargestellte Abdeckung 13 im Betrieb mindestens teilweise geschlossen werden, wozu die Abdeckung 13 nach unten verfahren wird.

Die Quelle 18 für den Gas- und Partikelstrom ist in diesem bevorzugten Beispiel direkt mit der Zuführleitung 21 verbunden, so dass sich auch die Quelle translatorisch hin- und her bewegt bzw. der translatorischen Rohrbewegung bei der Bearbeitung des Rohres folgt. Dies ist bevorzugt, um einen möglichst geradlinigen Weg für den Partikel- und Gasstrom von der Quelle zum Bearbeitungsbereich zu erreichen. Es ist aber auch möglich, die Quelle feststehend anzuordnen und die Zuführleitung gegenüber der Quelle zu bewegen, wozu dann mindestens teilweise eine flexible Zuführleitung eingesetzt wird.

Bevorzugt werden als Partikel in der Quelle bzw. im Partikelbehälter 20 Glasstrahlperlen verwendet. Es hat sich gezeigt, dass diese eine gute Wirkung beim Auffangen des Abbrandes aufweisen und zudem eine Oberflächenbehandlung im Rohr ermöglichen. Bevorzugt sind dies gehärtete Glasstrahlperlen, insbesondere mit einer Mohshärte im Bereich von 6 bis 7, welche besonders für die Oberflächenbehandlung der üblicherweise bearbeiteten Metallrohre geeignet sind. Weiter ist es bevorzugt, dass die Korngrösse der Glasstrahlperlen im Bereich von 100µm bis 400µm gewählt wird und insbesondere im Bereich von 150µm bis 250µm. Es hat sich gezeigt, dass damit im Zusammenspiel mit der Laserbearbeitung besonders gute Resultate erzielbar sind. Gehärtete Glasstrahlperlen sind als nichtmetallisches, mineralisches Feinstrahlmittel bekannt und ein Handelsprodukt und können zum Beispiel aus gehärtetem, bleifreiem Natronglas bestehen. Bevorzugt wird als Gas der Gasquelle 19 Luft bzw. Druckluft verwendet, was eine besonders einfache Ausführung des Verfahrens ergibt. Es ist aber auch möglich andere Gase zu verwenden.

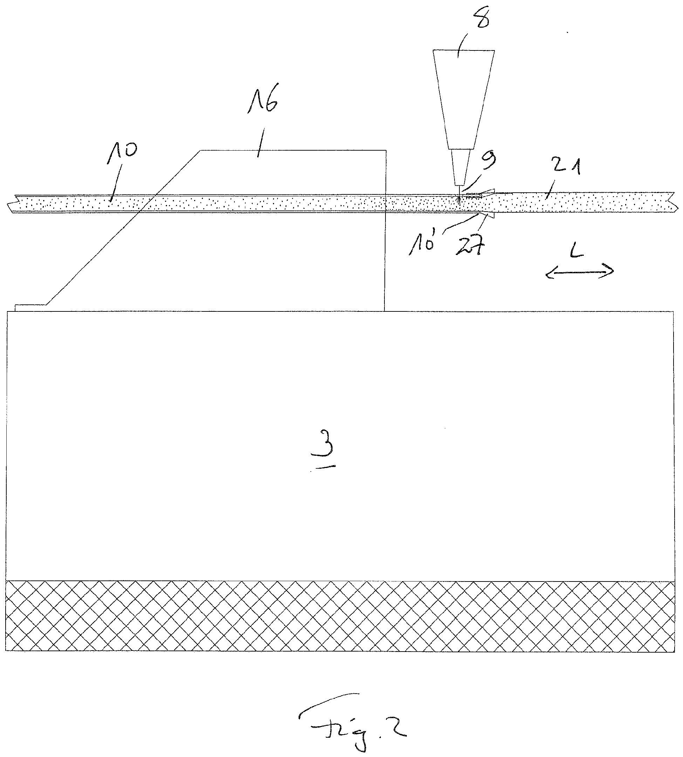

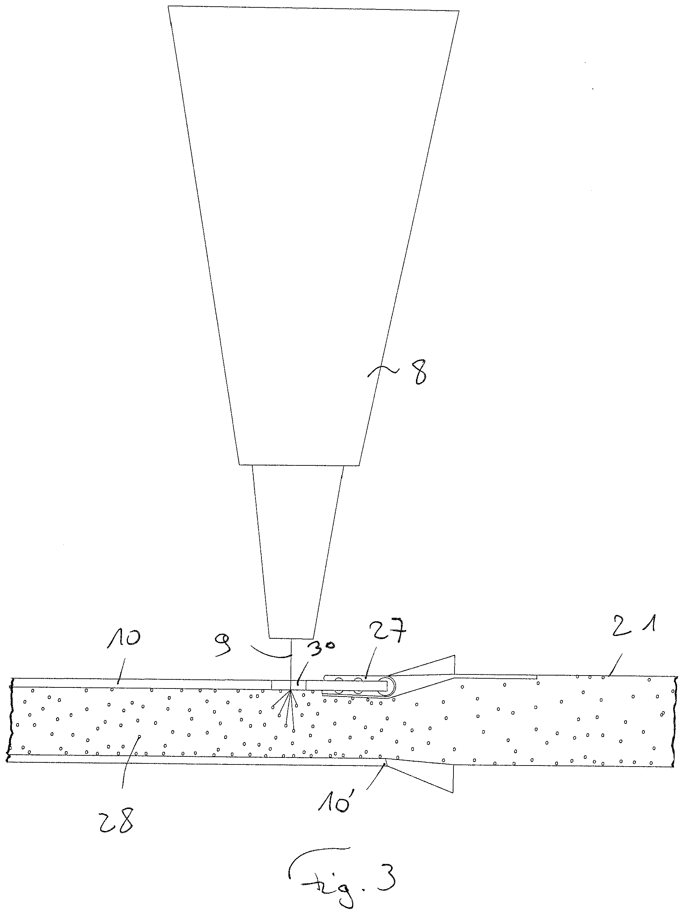

Die Figuren 2 und 3 zeigen in schematischer Darstellung die Bearbeitungsstation 3 der Laserbearbeitungsvorrichtung 1. Bevorzugt weist diese eine während der Bearbeitung des Rohrs schliessbare Kabine 12 auf, welche den eigentlichen Bearbeitungsbereich, in welchem der Laserstrahl 9 auf das Rohr 10 einwirkt, weitgehend umschliesst. Die Einleitung des Rohrs 10 in die Kabine und die Einleitung der Zuführleitung 21 in die Kabine sind natürlich auch bei geschlossener Kabine ermöglicht.

Es ist als Beispiel dargestellt, dass die Zuführleitung 21 mit dem Ende 10' des zu bearbeitenden Rohrs 10 mechanisch gekoppelt ist. Dazu ist am rohrseitigen Ende der Zuführleitung 21 ein nur schematisch dargestelltes Kopplungseinrichtung 27 befestigt, zum Beispiel eine öffenbare und schliessbare Klemme bzw. Zange, welche das Ende des Rohrs 10 greift und die Kopplung des Rohrs und der Zuführleitung bewirkt, wenn die Bedienungsperson der Vorrichtung 1 das Rohr 10 in der Vorrichtung positioniert hat und die Zuführleitung händisch an das Rohr herangeführt und die Kopplungseinrichtung 27 am Rohr befestigt hat. Die Kopplung bewirkt, dass die Zuführleitung 21 und das Rohr 10 im Wesentlichen fluchtend und mit im Wesentlichen koaxialen Längsachsen positioniert sind und zur gemeinsamen translatorischen hin- und her Bewegung angeordnet sind. Die translatorische Bewegung des Rohrs 10 durch die Bearbeitungsvorrichtung 1 bei der Bearbeitung mittels des Laserstrahls 9 wird somit auf die bewegbare Zuführleitung übertragen und diese folgt der Rohrbewegung. Dies gilt in diesem Beispiel auch für die am anderen Ende der Zuführleitung angeordnete Quelle 18. Die aus dieser austretenden Partikel 28, die durch den Gas- bzw. Druckluftstrahl der Quelle durch die Zuführleitung und durch das Rohr gefördert werden, verhindern eine Beschädigung der Rohrinnenseite auf der der jeweiligen Bearbeitungsseite 30 gegenüberliegenden Seite des Rohrs, da der Laserstrahl im Rohrinneren durch die Partikel 28 gestreut wird. Ferner nehmen die Partikel 28 den Abbrand auf, entfernen Grate und sie erzielen eine Behandlung der Rohrinnenseite. Die Abfuhr der Partikel erfolgt durch die in der Regel vorhandene Saugeinrichtung 5 der Laserbearbeitungsvorrichtung am anderen Ende des Rohrs 10. Nach der Bearbeitung des Rohrabschnitts mittels des Laserstrahls kann die Quelle 18 deaktiviert werden und es wird der fertig bearbeitete Abschnitt des Rohrs vom restlichen Rohr durch den Laser abgelängt. Die Bedienungsperson wird dann den in der Zange 27 verbliebenen Teil des Rohrs entfernen und dieser gelangt in den Schrottbehälter. Für die Bearbeitung des nächsten Teils wird erneut das Rohrende 10' mit der Kopplungseinrichtung 27 bzw. Zange an die Zuführleitung gekoppelt, die Quelle 18 erneut aktiviert und der Bearbeitungsvorgang am nächsten zu bearbeitenden Rohrabschnitt aufgenommen. Dieser Vorgang wiederholt sich, bis alle gewünschten bearbeiteten Rohrabschnitte erzeugt worden sind. Allenfalls wird dazu ein weiteres Rohr 10 durch die Bedienungsperson in der Laserbearbeitungsvorrichtung eingespannt, welches dann ebenfalls auf die beschriebene Weise bearbeitet wird.

Alternativ zu einer mechanischen Kopplung, bei welcher die Zuführleitung mechanisch formschlüssig oder reibschlüssig mit einem Kopplungsmittel mit dem Rohr 10 verbunden wird, kann die Kopplung auch durch einen Antrieb erfolgen, mittels welchem die Zuführleitung 21 anliegend an das Ende 10' des Rohrs 10 steuerbar translatorisch verfahrbar ist, so dass durch den Antrieb der Zuführleitung diese gleichlaufend mit dem Rohr verfahren wird, so dass das Anliegen des Endes der Zuführleitung am Ende des Rohrs durch den gesteuerten Antrieb sichergestellt ist. Die Steuerung dieses Antriebs der Zuführleitung, welcher in Figur 1 mit dem Block 29 schematisch dargestellt ist und zum Beispiel ein elektromotorischer Antrieb ist, erfolgt vorzugsweise mittels der Steuerung 30 der Laserbearbeitungsvorrichtung. Dies ist in Figur 1 durch die unterbrochene Linie als Steuerleitung dargestellt. Die translatorische Bewegung der angetriebenen Zuführleitung 21 erfolgt somit synchron mit der translatorischen Bewegung des Rohrs 10.

Die Kopplung der Zuführleitung 21 an das Rohr 10 erfolgt vorzugsweise so, dass zwar die Kopplungseinrichtung die Rotation des Rohrs 10 zu dessen Bearbeitung mitmacht, dass aber der restliche Teil der Zuführleitung 21 und auch die Quelle 18 von der Rotation des Rohrs 10 entkoppelt ist. Die Ausführung einer solchen Drehbarkeit des Kopplungseinrichtung 27 gegenüber der Zuführleitung durch entsprechende Wälzlager oder Gleitlager ist für den Fachmann einfach ersichtlich und muss hier nicht weiter erläutert werden.

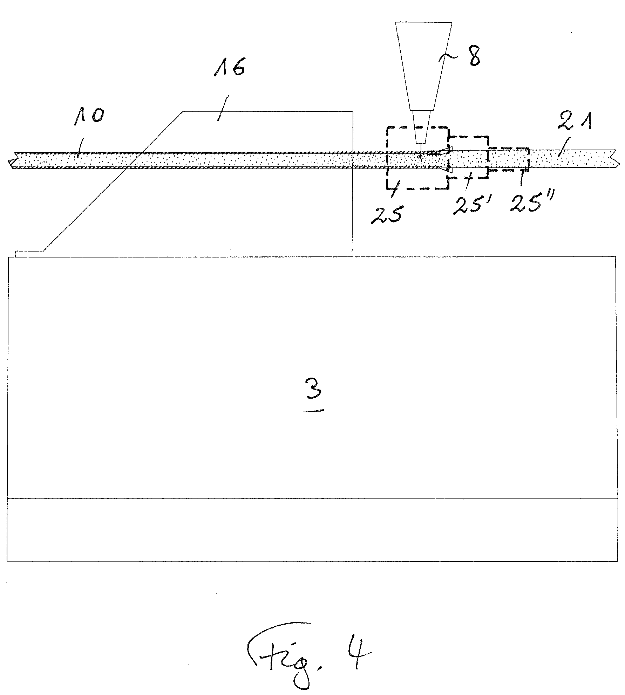

In Figur 4 ist schematisch dargestellt, dass eine Abschirmung vorgesehen sein kann, welche insbesondere im Bereich des Laserstrahls einen U-förmigen Auffangteil 25 aufweisen kann, welcher nur in unterbrochenen Linien angedeutet ist und das Ende 10' des Rohrs umgibt und welcher oben offen ist und den Eintritt des Laserstrahls in den Auffangteil erlaubt, welcher aber mit seinem unten geschlossenen Teil allfällige Glasstrahlperlen und Bearbeitungsrückstände des Rohrs auffängt, so dass diese nicht frei in die Bearbeitungskabine gelangen. Die Abschirmung kann wie dargestellt teleskopartig mehrere Glieder 25, 25' und 25'' umfassen und von der Zuführleitung ausgehen um das Ende des Rohrs vorschiebbar sein.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Laserbearbeitung eines Rohrs (10), bei welchem das Rohr translatorisch in der Rohrlängsrichtung L und rotierend um die Rohrlängsachse relativ zu mindestens einer Laserstrahlquelle (8) bewegt wird und der aus der Laserstrahlquelle (8) austretende Laserstrahl (9) das Rohr bearbeitet und wobei Partikel (28) mittels eines Gasstrahls durch das Rohr gefördert werden, **dadurch gekennzeichnet, dass** von einer Gasdruck- und Partikelquelle (18, 19, 20) eine translatorisch bewegbare Zuführleitung (21) für den partikelführenden Gasstrahl zum einen Ende (10') des Rohrs vorgesehen ist, mittels welcher Zuführleitung der partikelführende Gasstrahl an dem Ende (10') des Rohrs (10) in das Rohr eingespeist wird, und dass die Zuführleitung (21) mit dem zu bearbeitenden Rohr gekoppelt wird, derart, dass die Zuführleitung der translatorischen Rohrbewegung folgt, und dass der Gasstrahl mit den Partikeln an dem anderen Ende (10'') des Rohrs abgeführt wird.

2. Verfahren nach Anspruch 1, wobei die Zuführleitung mit dem Rohr gekoppelt wird, indem sie mechanisch mit dem Rohr verbunden wird, oder wobei die Zuführleitung mit dem Rohr gekoppelt wird, indem sie das Rohr berührend an dieses angelegt und aktiv angetrieben derart verfahren wird, dass sie dieselbe Translationsbewegung wie das Rohr ausführt, so dass sie die am Rohr angelegte Position beibehält.

3. Verfahren nach Anspruch 1 oder 2, wobei die Zuführleitung mit dem Rohr derart gekoppelt wird, dass sie von der rotierenden Rohrbewegung entkoppelt ist, so dass die Zuführleitung der Translationsbewegung des Rohrs folgt, dessen Rotationsbewegung aber nicht folgt.

4. Verfahren nach einem der Ansprüche 1 bis 3, wobei die Bearbeitung des Rohrs durch den Laserstrahl in einer Bearbeitungskabine (12) erfolgt und die Kopplung der Zuführleitung mit dem Ende des zu bearbeitenden Rohrs innerhalb der Bearbeitungskabine erfolgt.

5. Verfahren nach einem der Ansprüche 1 bis 4, wobei als Partikel Glasstrahlperlen verwendet werden.

6. Verfahren nach Anspruch 5, wobei gehärtete Glasstrahlperlen verwendet werden, insbesondere mit einer Mohshärte im Bereich von 6 bis 7.

7. Verfahren nach einem der Ansprüche 5 oder 6, wobei die Korngrösse der Glasstrahlperlen im Bereich von 100µm bis 400µm gewählt wird und insbesondere im Bereich von 150µm bis 250µm.

8. Verfahren nach einem der Ansprüche 1 bis 7, wobei als Gas Luft verwendet wird.

9. Verfahren nach einem der Ansprüche 1 bis 8, wobei als Zuführleitung eine starre Leitung zwischen Gas- und Partikelquelle und dem Ende des Rohrs verwendet wird.

10. Verfahren nach einem der Ansprüche 1 bis 9, wobei der Kopplungsbereich ganz oder teilweise durch eine mechanische Abschirmung umgeben wird, welche aus dem Kopplungsbereich austretende Partikel auffängt.

11. Laserbearbeitungsvorrichtung (1) für Rohre (10) umfassend eine Transporteinrichtung (4, 16) für ein Rohr, welche Rohrhaltemittel aufweist, die derart ausgestaltet sind, dass ein Rohr in seiner Längsrichtung translatorisch bewegbar und um seine Längsachse rotierbar ist, eine Laserstrahlquelle (8) zur Beaufschlagung des von der Transporteinrichtung bewegten Rohrs, eine Gas- und Partikelquelle (18, 19, 20) und eine von dieser wegführende translatorisch bewegbare Zuführleitung (21) für den partikelführenden Gasstrahl sowie eine Kopplungseinrichtung (7), durch welche das von der Gas- und Partikelquelle entfernte Ende der Zuführleitung (21) mit dem einen Ende (10') des zu bearbeitenden Rohrs (10) koppelbar ist.

12. Laserbearbeitungsvorrichtung (1) nach Anspruch 11, wobei die Kopplungseinrichtung ausgeführt ist, um die Zuführleitung mechanisch mit dem Rohr zu verbinden, insbesondere mit einer Klemmanordnung, durch welche das Ende des Rohrs klemmend greifbar ist, oder wobei die Kopplungseinrichtung einen Nachführantrieb (29, 30) für die Zuführleitung aufweist, mittels welchem die Zuführleitung translatorisch der Rohrbewegung folgend dem Rohr nachführbar ist.

13. Laserbearbeitungsvorrichtung (1) nach Anspruch 11 oder 12, wobei die Kopplungseinrichtung (27) derart ausgestaltet ist, dass die Zuführleitung von der rotierenden Rohrbewegung entkoppelt ist, so dass die Zuführleitung der Translationsbewegung des Rohrs folgen kann, dessen Rotationsbewegung aber nicht folgt.

14. Laserbearbeitungsvorrichtung (1) nach einem der Ansprüche 11 bis 13, wobei diese eine Bearbeitungskabine (12) aufweist, in welcher die Bearbeitung des Rohrs durch den Laserstrahl erfolgt und wobei die Kopplung der Zuführleitung (21) mit dem Ende (10') des zu bearbeitenden Rohrs innerhalb der Bearbeitungskabine (12) erfolgt.

15. Laserbearbeitungsvorrichtung (1) nach einem der Ansprüche 11 bis 14, wobei die Partikelquelle als Partikel Glasstrahlperlen aufweist, insbesondere Glasstrahlperlen mit einer Mohshärte im Bereich von 6 bis 7 und insbesondere Glasstrahlperlen mit einer Korngrösse im Bereich von 100µm bis 400µm und insbesondere im Bereich von 150µm bis 250µm.

16. Laserbearbeitungsvorrichtung (1) nach einem der Ansprüche 11 bis 15, wobei die Gasquelle eine Luftdruckquelle ist.

17. Laserbearbeitungsvorrichtung (1) nach einem der Ansprüche 11 bis 16, wobei als Zuführleitung (21) eine starre Leitung zwischen Gas- und Partikelquelle und dem Ende (10') des Rohrs vorgesehen ist, wobei insbesondere die Gas- und Partikelquelle mit der Zuführleitung zusammen bewegbar angeordnet ist, oder wobei als Zuführleitung (21) eine Leitung aus starren und flexiblen Abschnitten zwischen Gas- und Partikelquelle und dem Ende (10') des Rohrs vorgesehen ist, ober wobei als Zuführleitung (21) eine flexible Leitung zwischen Gas- und Partikelquelle und dem Ende (10') des Rohrs vorgesehen ist.

18. Laserbearbeitungsvorrichtung (1) nach einem der Ansprüche 11 bis 17, wobei diese eine mechanische Abschirmung (25, 25'. 25'') aufweist, welche den Bereich der Kopplung des Rohrs (10) mit der Zuführleitung (21) ganz oder teilweise umgibt, wodurch aus dem Kopplungsbereich austretende Partikel auffangbar sind.
